# FASCICULE DE BREVET EUROPEEN

(11) **EP 3 439 946 B1**
(45) Date de publication et mention de la délivrance du brevet: **27.03.2024**
(21) Numéro de dépôt: 17719180.6
(22) Date de dépôt: 04.04.2017
(51) Int. Cl.: B62M 9/08, B62M 3/00, B62M 3/06

(54) **PÉDALIER DE CYCLE À PLATEAU FLOTTANT AUTO-POSITIONNÉ**
RADKURBELSATZ MIT SELBSTEINSTELLENDEM SCHWEBENDEM KETTENRING
CYCLE CRANKSET WITH SELF-POSITIONED FLOATING CHAINRING

(30) Priorité: 04.04.2016 FR 1600572; 04.10.2016 FR 1601443
(43) Date de publication de la demande: 13.02.2019
(73) Titulaire: C3B, 13002 Marseille (FR)
(72) Inventeur: CERDAN, Jacques, 45600 Sully sur Loire (FR)
(74) Mandataire: Boüan du Chef du Bos, Louis-Paterne
(86) Numéro de dépôt international: PCT/EP2017/058043
(87) Numéro de publication internationale: WO 2017/174617

(56) Documents cités:
- CN-A- 1 200 342
- FR-A- 984 583
- FR-A1- 2 742 408
- US-A- 4 309 043
- US-A- 5 442 972
- US-A- 6 085 613
- US-A1- 2004 045 401
- US-B1- 6 367 352

## Description

### Domaine de l'invention

La présente invention concerne un pédalier de véhicule à pédales. Elle trouve des applications particulièrement avantageuses, mais non exclusives, dans le domaine des bicyclettes ou autres cycles et des engins similaires. Dans le cadre de l'invention, le terme de bicyclette doit être compris dans son sens le plus général. Il englobe notamment les termes de bicyclette proprement dite, vélo de course, tricycle, quadricycle, vélo tout terrain, pédalo, fauteuil roulant pour personne à mobilité réduite. De façon générale, l'invention s'applique à tout type de véhicule ou engin mû par un mécanisme mettant en jeu un pédalier, qu'il soit destiné à des adultes ou à des enfants (jouet). Pour fixer les idées, on se placera dans ce qui suit dans le cas de l'application préférée de l'invention, à savoir une bicyclette classique, sans que cela limite en quelque façon que ce soit la portée de l'invention.

### Art antérieur

Actuellement les pédaliers comportent au moins un plateau à couronne dentée qui est solidaire en rotation d'un arbre tournant autour d'un axe fixe de pédalage et qui entraîne une chaîne. Cette dernière entraîne à son tour un pignon denté, solidaire d'un arbre de rotation de la roue arrière. Ce pignon n'est pas nécessairement unique, il peut être constitué d'un dérailleur muni de plusieurs pignons de rapports différents pour s'adapter aux configurations du terrain. Le plateau à couronne dentée est solidaire de deux manivelles situées symétriquement de part et d'autre du cadre de la bicyclette et décalées l'une de l'autre de 180°. Les extrémités libres des manivelles sont munies d'un pas de vis permettant d'y fixer une pédale libre en rotation autour d'un axe de liaison. De ce fait, en exerçant des forces de poussée sur les pédales, le cycliste entraîne en rotation le plateau à couronne dentée qui entraîne à son tour la roue arrière par l'intermédiaire de la chaîne. Ce type de pédalier présente des inconvénients dont le principal est dû à la configuration symétrique des manivelles qui ont leurs axes longitudinaux alignés. En particulier lorsqu'une des pédales est en position basse (point mort bas : PMB), son opposée est en position haute (point mort haut : PMH). Dans cette position si le cycliste exerce une poussée vers le bas sur la pédale, il est aisé de comprendre que cette poussée se révèle inefficace puisqu'il n'existe pas alors de composante de force entraînant en rotation les manivelles.

Dans l'état de la technique, il existe différentes solutions pour faciliter le passage du point mort haut PMH. Les systèmes les plus pertinents utilisent des manivelles indépendantes et un plateau décentré par une came. Des biellettes assurent la liaison entre les manivelles et le plateau. Ceci est décrit, par exemple dans le brevet FR 2 584 671, dans la demande de brevet FR 2 742 408 A1, dans la demande US 2004/045401 A1 ou dans le brevet US 6 367 352 B1. Le document FR984583 montre un dispositif pédalier de cycle, conforme au préambule de la revendication 1.

### inconvénients de l'art antérieur

Dans ces mécanismes, il subsiste des inconvénients dus à la géométrie. En effet l'axe d'articulation, sur la manivelle, commandant la rotation du plateau est située entre l'axe de la pédale et l'axe des manivelles. Cette configuration impose, pour obtenir la suppression du point mort, un décentrage du plateau vers l'avant dans une position qui n'est pas stable. En effet, la traction de la chaîne sur le pédalier tend à ramener la came de décentrage vers l'arrière. Il est donc nécessaire de prévoir un système de maintien de la came dans sa position de décentrage vers l'avant. Par ailleurs, la chaîne se trouve allongée par ce décentrage vers l'avant, ce qui entraîne une augmentation du poids du cycle. < Le document FR984583 montre un tel mécanisme dans lequel l'axe d'articulation commandant la rotation du plateau est situé, sur la manivelle, à l'opposé de l'axe de pédale, par rapport à l'axe de manivelle. Ce document ne propose cependant aucune possibilité de réglage de l'orientation de la came de décentrage. >

### Exposé de l'invention

Le pédalier selon l'invention permet de remédier à ces inconvénients. Il utilise des manivelles indépendantes pour la pédale droite et pour la pédale gauche, articulées autour d'un axe de manivelle, et un plateau décentré par une came montée pivotante autour de l'axe de manivelle, le plateau étant monté pivotant sur la came autour d'un axe parallèle à l'axe de manivelle.

La nouveauté de l'invention est due au fait que l'articulation entre la manivelle et la bielle commandant la rotation du plateau est située, sur la manivelle, dans la zone située à l'opposé de l'axe de pédale, par rapport à l'axe de manivelle.

Cette configuration détermine, lors de l'effort appliqué à la manivelle, une orientation du décentrage de la came vers l'arrière pour obtenir la suppression du point mort. La traction de la chaîne sur le pédalier tendant à décentrer la came vers l'arrière, la came prend donc naturellement la position qui permet d'éviter les points morts, sans qu'il soit nécessaire de fixer sa position.

Par ailleurs, l'orientation du décentrage de la came vers l'arrière permet de diminuer légèrement la longueur de la chaîne, et donc le poids du cycle.

L'invention concerne, plus précisément, un pédalier de cycle tel que défini par les revendications.

### Liste des figures

Les dessins annexés illustrent des modes de réalisation de l'invention :
- la figure 1 représente une vue latérale d'un pédalier selon un premier mode de réalisation ;
- la figure 1A représente une vue en coupe du pédalier de la figure 1 ;
- la figure 2 représente une vue latérale d'un pédalier selon un deuxième mode de réalisation ;
- la figure 2A représente une vue en coupe du pédalier de la figure 2 ;
- la figure 3 représente une vue latérale d'un pédalier selon un troisième mode de réalisation ;
- la figure 3A représente une section partielle du pédalier de la figure 3.

### Description détaillée de modes de réalisation de l'invention

### Premier mode de réalisation

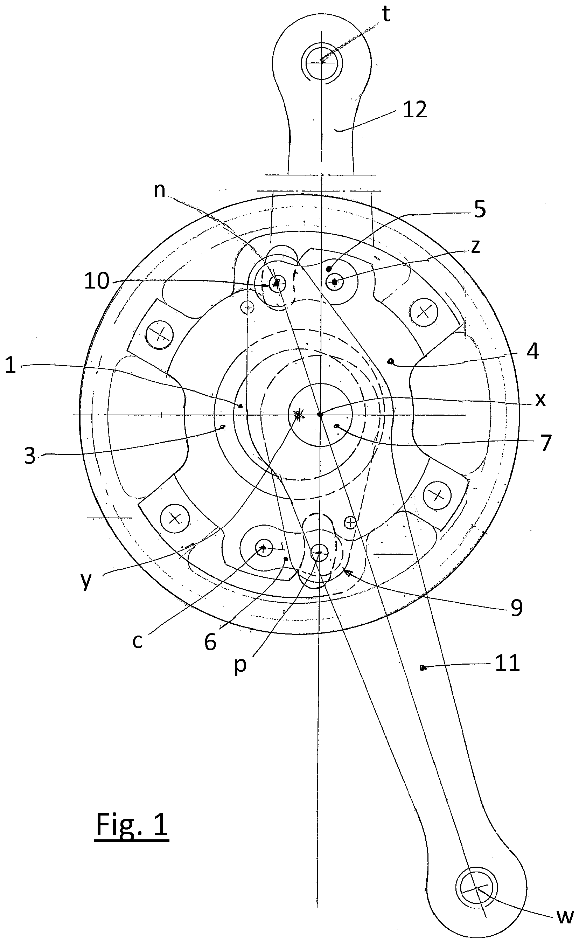

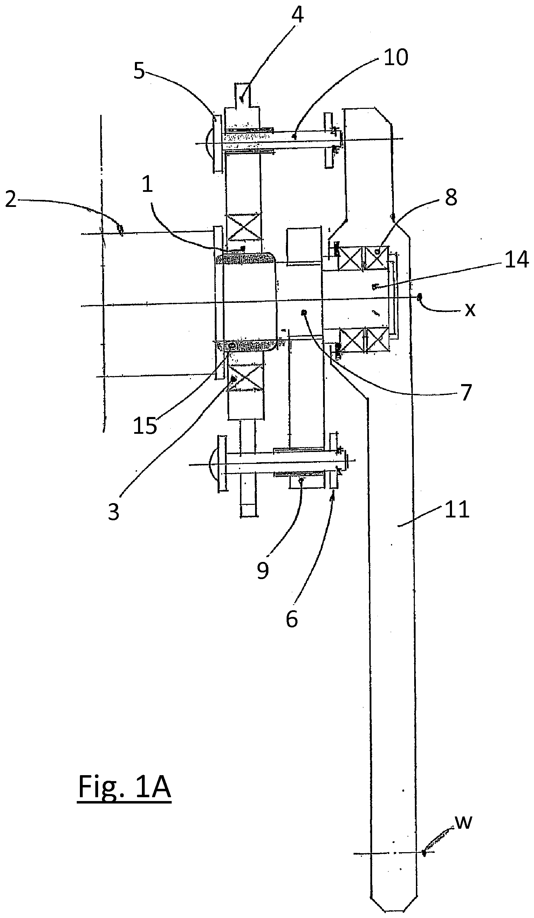

Les figures 1 et 1A représentent un pédalier d'un cycle, selon un premier mode de réalisation de l'invention.

Ce pédalier comporte deux manivelles indépendantes, une manivelle droite 11 et une manivelle gauche 12, qui sont montées pivotante autour d'un axe x appelé par la suite « axe de manivelle ». La manivelle gauche 12 est montée, de manière classique, solidaire de l'extrémité gauche d'un arbre, ou axe 7, qui est monté pivotant, selon l'axe de manivelle x, dans le boîtier 2 du cycle. La manivelle droite 11 est assemblée pivotante à l'extrémité droite de l'axe 7, par l'intermédiaire d'un maneton 14, vissé sur l'extrémité de l'axe 7, sur lequel sont montés deux roulements 8 portant la manivelle 11 et lui permettant de rotuler autour de l'axe x.

La manivelle droite 11 porte, à proximité de son extrémité libre, une pédale (non représentée) articulée sur un axe de pédale w. La manivelle 12 porte, à proximité de son extrémité libre, une pédale (non représentée) articulée sur un axe de pédale t.

Le pédalier comporte également une demi-manivelle 9, assemblée solidairement à l'axe 7 du côté droit du boîtier 2. Cette demi-manivelle 9 est rendue solidaire de l'axe 7, en rotation, par des rainures longitudinales prévues sur l'axe 7. Cette demi-manivelle 9 est donc pivotante autour de l'axe x, solidairement avec l'axe 7 et avec la manivelle gauche 12. L'ensemble constitué par la manivelle gauche 12, l'axe 7 et la demi-manivelle 9 est appelé par la suite « ensemble de manivelle gauche ». On considèrera également que, d'un point de vue cinématique, l'axe 7 et la demi-manivelle 9 font partie de la manivelle gauche. La demie-manivelle 9 constitue donc la partie de la manivelle gauche 12 opposée à l'axe de pédale t par rapport à l'axe de manivelle x.

Ce pédalier comporte encore une came 1, ou came de décentrage, comportant une surface cylindrique intérieure, centrée sur l'axe de manivelle x, et une surface cylindrique extérieure, centrée sur l'axe y parallèle à l'axe x. Cette came 1 est montée articulée sur l'axe 7, à la sortie à droite du boitier 2, grâce à un roulement à aiguille 15 placé sur l'axe 7 et portant la surface cylindrique intérieure de la came 1. La came 1 est donc montée pivotante autour de l'axe x.

La surface cylindrique extérieure, ou diamètre extérieur de la came 1 concentrique à l'axe y, porte un roulement 3 sur lequel est monté un porte-plateau 4 sur lequel est monté un plateau 17. L'ensemble formé par le porte-plateau 4 et par le plateau est appelé par la suite « ensemble de plateau ». Cet ensemble de plateau est donc monté pivotant sur la came 1, autour de l'axe y. Il est à noter que la came 1, et donc l'axe y, étant pivotant autour de l'axe de manivelle x, l'ensemble de plateau est donc monté mobile, ou flottant. Selon l'invention le pivotement de la came 1 n'est pas bloqué, la position de l'ensemble de plateau peut varier au cours du pédalage, lui permettant de s'auto-positionner.

Il est à noter que, selon des variantes de ce mode de réalisation, l'ensemble de plateau peut comporter plusieurs plateaux montés sur un porte-plateau. Cet ensemble peut également être constitué par un plateau unique directement monté pivotant autour sur la came 1.

Une première biellette 5 est articulée en un point n sur la manivelle droite 11 et en un point z sur le porte-plateau 4, ou plus généralement sur l'ensemble de plateau. Elle assure ainsi la liaison entre la manivelle droite 11 et l'ensemble de plateau. Une seconde biellette 6 est articulée, en un point p sur la demi-manivelle 9 et en un point c sur le porte-plateau 4, ou plus généralement sur l'ensemble de plateau. Elle assure ainsi la liaison entre l'ensemble de manivelle gauche et l'ensemble de plateau.

Dans le mode de réalisation représenté par la figure 1, le point n d'articulation entre la manivelle 11 et la biellette 5 (constitué par une tige 10) est situé, sur la manivelle n, sur le prolongement de la droite, appelée par la suite ligne de référence, passant par l'axe de la pédale w et l'axe de manivelle x, et à l'opposé de l'axe de pédale w, par rapport à l'axe de manivelle x.

De la même façon, sur l'ensemble de manivelle gauche, le point p d'articulation entre la demi-manivelle 9 et la biellette 6 est situé, dans le plan passant par l'axe de pédale t et l'axe de manivelle x, à l'opposé de l'axe de pédale t, par rapport à l'axe de manivelle x.

### Second mode de réalisation

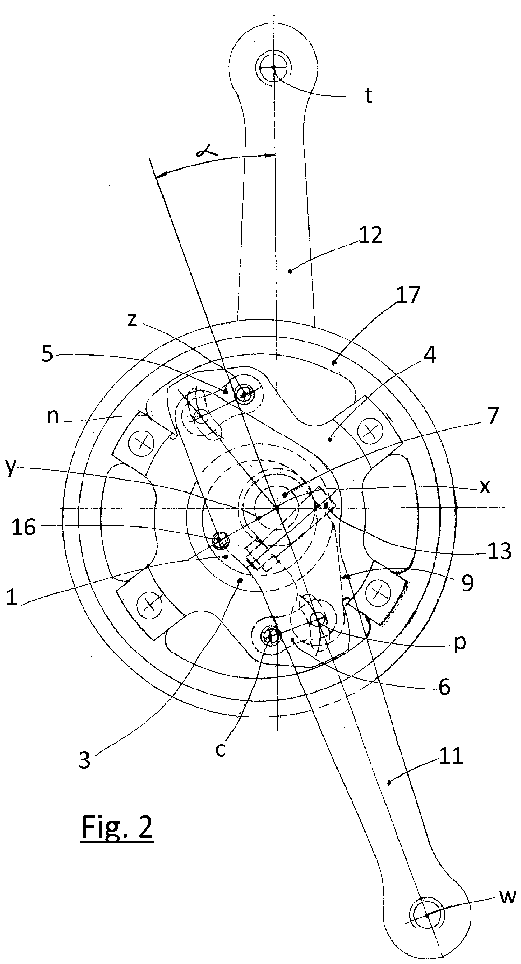

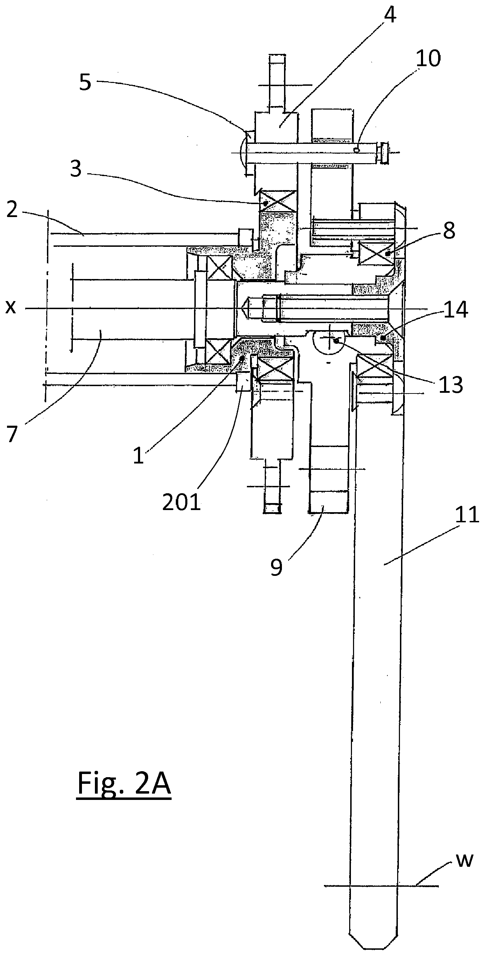

Les figures 2 et 2A représentent un pédalier selon un second mode de réalisation de l'invention. Dans ce mode de réalisation, de nombreux éléments du pédalier sont identiques ou similaires au pédalier du premier mode de réalisation. Ces éléments portent les mêmes références que dans le premier mode de réalisation, et ne sont pas décrits à nouveau.

Dans la variante représentée par ces figures, la came 1 comporte une partie filetée, vissée dans le boîtier du cycle 2. Dans ce mode de réalisation, la came est donc montée pivotante autour de l'axe x par l'intermédiaire de ce filetage. Elle peut tourner librement, en se vissant ou en se dévissant, si la partie filetée n'est pas bloquée. Dans une variante qui ne fait pas partie de l'invention, il est cependant possible, également, de bloquer son pivotement en serrant contre le boîtier 2 un contre-écrou 201 vissé sur le filetage de la came 1. Ce contre-écrou 201 constitue, dans ce cas, un moyen de limitation du pivotement de la came 1 autour de l'axe de manivelle x.

Dans ce mode de réalisation, le point n de l'articulation entre la manivelle 11 et la biellette 5 est décalé par rapport à la ligne de référence passant par l'axe de la pédale w et l'axe de manivelle x.

Ce point d'articulation n reste, sur la manivelle 11, dans la partie de la manivelle opposée à l'axe de pédale w, par rapport à l'axe de manivelle x. Ainsi, si l'on considère que la manivelle droite 11 est séparée en deux parties par un plan, appelé plan transversal, passant par l'axe de manivelle x et perpendiculaire au plan passant par l'axe de manivelle x et l'axe de pédale w, le point d'articulation n et l'axe de pédale w sont situés, sur la manivelle, chacun d'un côté du plan transversal.

De façon similaire, le point p de l'articulation entre la demi-manivelle 9 et la biellette 6 est décalé par rapport au plan passant par l'axe de pédale t de la manivelle gauche 12 et l'axe de manivelle x. Ce point d'articulation p reste, sur l'ensemble de manivelle gauche constitué par la manivelle gauche 12, l'axe 7 et la demi-manivelle 9, dans la partie opposée à l'axe de pédale t, par rapport à l'axe de manivelle x. Ainsi, si l'on considère que l'ensemble de manivelle gauche est séparé en deux parties par un plan, appelé plan transversal, passant par l'axe de manivelle x et perpendiculaire au plan passant par l'axe de manivelle x et l'axe de pédale t, le point d'articulation p et l'axe de pédale t sont situés, sur cet ensemble, chacun d'un côté du plan transversal.

Ce décalage de la position du point d'articulation n, ou du point d'articulation p, permet avantageusement de modifier légèrement l'application des forces sur le pédalier. Il peut par exemple permettre de faire mieux correspondre la direction des forces exercée sur la came 1 avec la position de cette came 1 qui permet d'éviter efficacement les points morts.

La came de décentrage 1 est montée pivotante sur l'axe 7. Dans certaines configurations, on peut choisir de laisser cette came 1 pivoter librement, par exemple pour que cette came s'auto-positionne sous l'effet du pédalage, ou prenne naturellement sa position idéale pour éviter les points morts. Dans d'autres cas il peut être avantageux que la came pivote légèrement au cours du pédalage, par exemple en oscillant légèrement autour d'une position d'équilibre. Dans d'autres cas encore, il peut être utile de limiter ce pivotement. Une telle limitation du pivotement peut être obtenue par différents moyens de limitation du pivotement, par exemple par une butée 16, fixée sur la came 1 et prenant appui sur une partie du cycle. La came 1 peut présenter plusieurs emplacements pour fixer une telle butée, à des positions différentes.

Suivant la position de la butée 16, elle peut limiter le pivotement de la came 1 à une plage angulaire désirée. Dans d'autres réalisations ne faisant pas partie de l'invention, il est également possible de placer cette butée, ou plusieurs butées, de façon à bloquer complètement le pivotement de la came 1. Dans ce cas, on peut choisir d'arrêter la came 1, par une ou plusieurs butée, à la position déterminée par le pédalage. On peut également décider de maintenir la came à une autre position, pour satisfaire à différentes raisons, comme un changement du décalage des points morts, ou un ajustement à la morphologie du cycliste, ou pour s'adapter à des conditions d'utilisation différentes. On peut également prévoir, quand deux butées sont prévues, que ces butées soient souples afin de permettre une légère oscillation de la came 1.

Dans le mode de réalisation des figures 2 et 2A, le montage solidaire de la demi-manivelle 9 sur l'axe 7 est réalisé grâce à une clavette 13. L'homme du métier pourra bien sûr adapter le mode de fixation de la demi-manivelle le plus adapté, pour chacun des modes de réalisation de l'invention.

### Troisième mode de réalisation

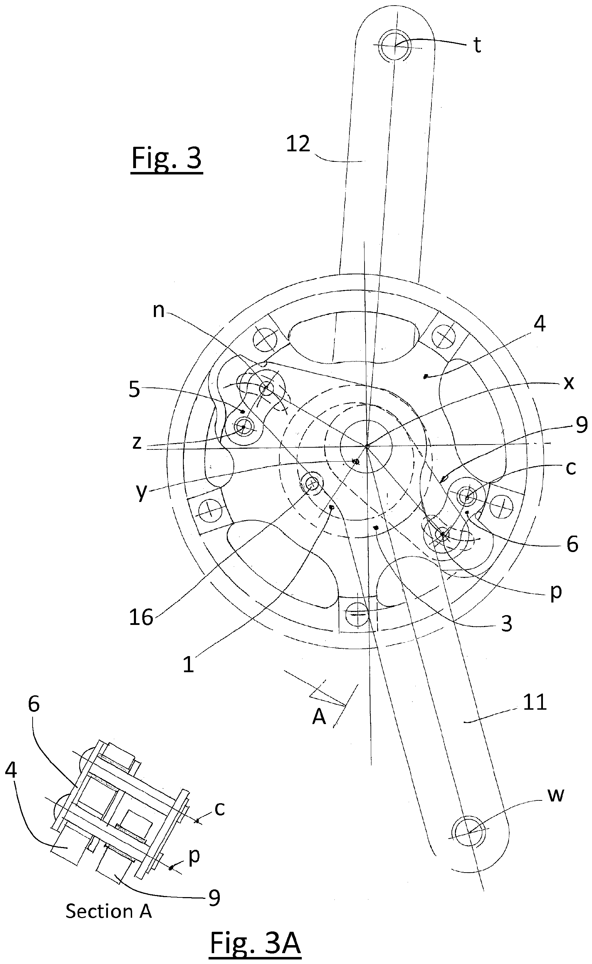

Les figures 3 et 3A représentent un pédalier selon un troisième mode de réalisation de l'invention. Dans ce mode de réalisation, de nombreux éléments du pédalier sont identiques ou similaires au pédalier du premier ou du deuxième mode de réalisation. Ces éléments portent les mêmes références que dans le premier ou le deuxième mode de réalisation, et ne sont pas décrits à nouveau.

Selon cette solution particulièrement avantageuse, représentée par la figure 3, l'angle formé entre, d'une part, le rayon passant par l'axe de manivelle x et l'articulation n et, d'autre part, la ligne de référence passant par l'axe de pédale w et l'axe de manivelle est d'environ 45°. Dans ce cas de figure, de façon avantageuse, la ligne de décentrage x-y, qui est représentative de la position angulaire de la came 1 autour de l'axe x, est positionnée automatiquement à la position la plus adaptée à la performance.

La position angulaire de la came est en effet induite par la composante de l'effort appliqué sur la manivelle et à l'effort consécutif de la réaction de la chaîne.

De la même façon, dans l'ensemble de manivelle gauche, l'angle formé entre, d'une part, le plan passant par l'axe de manivelle x et l'articulation p et, d'autre part, le plan passant par l'axe de pédale t et l'axe de manivelle x est d'environ 45°.

La valeur de l'angle de 45° n'est pas limitative, elle peut varier de 0 à 90° de part et d'autre de l'axe de référence, passant par l'axe de manivelle x et l'axe de pédale w. Ainsi l'articulation n, ou respectivement l'articulation p, peuvent être placée sur la manivelle droite 11, ou respectivement sur l'ensemble de manivelle gauche, en tout point de la partie de cette manivelle, ou de cet ensemble de manivelle, qui est opposée à l'axe de pédale, par rapport à l'axe de manivelle.

Dans le mode de réalisation représenté à la figure 3, les biellettes 5 et 6 sont placées, entre les manivelles et l'ensemble de plateau, de façon à agir, lors du pédalage, en tirant l'ensemble de plateau. En d'autres termes, ces biellettes sont placées de façon à être sollicitées en traction, au contraire des modes de réalisation représentés par les figures 1 et 2, dans lesquels les biellettes 5 et 6 sont placées de façon à être sollicitées en compression. De façon générale, l'homme du métier pourra choisir l'une ou l'autre des solutions.

La figure 3A représente une section partielle du pédalier de la figure 3, passant par les axes p et c de la biellette 6. Dans ce mode de réalisation, la biellette 6 est constituée par une épingle de chaîne, comprenant une première tige, selon l'axe c, qui est montée pivotante dans le porte-plateau 4 grâce à un palier lisse, et une seconde tige, selon l'axe p, qui est montée pivotante dans la demi-manivelle 9 grâce à un palier lisse. Cette seconde tige traverse le porte-plateau 4 en passant dans une lumière adaptée pour permettre les mouvements de la biellette 6. Dans d'autres modes de réalisation possible, les biellettes 5 et 6 peuvent être des maillons de chaîne. De même, les paliers lisses peuvent être remplacés par des roulements.

De façon avantageuse, le pédalier selon l'invention peut comporter un carter de protection, et éventuellement une réserve d'huile destinée à lubrifier les mécanismes.

Selon une caractéristique avantageuse, le pédalier selon l'invention peut être utilisé avec des plateaux ovoïdes ou ovales, qui sont connus de l'homme du métier. De tels plateaux permettent une démultiplication de l'effort différente en fonction de la position angulaire du plateau. Le montage d'un tel plateau sur le pédalier de l'invention, par exemple décalé de 90° par rapport à sa position de montage habituelle sur les pédaliers classiques, peut permettre d'atténuer ou de supprimer les modifications de bras de levier selon la position des pédales qui est induite par le pédalier selon l'invention.

De façon générale, l'homme du métier pourra sans difficulté combiner les caractéristiques présentées dans les différents modes de réalisation de la présente demande, sans sortir du cadre de l'invention.

Le pédalier selon l'invention est particulièrement destiné à équiper des cycles dans le but d'améliorer leurs performances. Par cycle on entend vélo de compétition, cyclotourisme, VTT, vélo électrique, vélo pour handicapé, vélo-couché etc......

## Revendications

1. Pédalier de cycle, comprenant
- des manivelles indépendantes (11, 12) articulées autour d'un axe de manivelle (x) et présentant chacune un axe de pédale (w, t),
- une came (1), et
- un ensemble de plateau (4,17) monté pivotant autour de la came (1), autour d'un axe parallèle à l'axe de manivelle,
les manivelles (11, 12) étant reliées audit ensemble de plateau (4,17) par l'intermédiaire de biellettes (5, 6), chaque point d'articulation (n) entre l'une desdites manivelles (11, 12) et l'une desdites biellettes (5, 6) étant situé sur la partie de la manivelle opposée à l'axe de pédale (w, t), par rapport à l'axe de manivelle (x),
**caractérisé en ce que** ladite came (1) est montée pivotante autour dudit axe de manivelle (x), le pivotement de ladite came (1) autour dudit axe de manivelle (x) n'étant pas bloqué, et la position de l'ensemble de plateau (4,17) peut varier au cours du pédalage, lui permettant de s'auto-positionner.

2. Pédalier de cycle selon la revendication 1, **caractérisé en ce que** ledit point d'articulation est situé, sur chacune desdites manivelles, dans un plan passant par l'axe de manivelle (x) et formant un angle compris entre 0 et 90° avec le plan passant par l'axe de pédale (w, t) et l'axe de manivelle (x).

3. Pédalier de cycle selon la revendication 1, **caractérisé en ce que** ledit point d'articulation est situé, sur chacune desdites manivelles, dans le plan passant par l'axe de pédale (w, t) et l'axe de manivelle (x).

4. Pédalier de cycle selon l'une quelconque des revendications précédentes, **caractérisé en ce qu'**il comprend des moyens de limitation du pivotement de la came autour dudit axe de manivelle (x).

5. Pédalier de cycle selon la revendication 4, **caractérisé en ce que** lesdits moyens de limitation du pivotement comprennent au moins une butée (16) apte à prendre appui sur une partie du cycle.

6. Pédalier de cycle selon l'une quelconque des revendications 1 à 3, **caractérisé en ce que** la came (1) est laissée libre de pivoter autour dudit axe de manivelle (x).

7. Pédalier de cycle selon l'une quelconque des revendications précédentes, **caractérisé en ce que** ladite came (1) comporte une partie filetée, apte à être vissée à l'intérieur du boîtier de cycle (2) pour être apte à pivoter autour de l'axe de manivelle (x).

## Patentansprüche

1. Fahrradtretlager, umfassend
- unabhängige Kurbeln (11, 12), die um eine Kurbelachse (x) gelenkig sind und jeweils eine Pedalachse (w, t) aufweisen,
- einen Nocken (1), und
- eine Kettenblattanordnung (4, 17), die um den Nocken (1) um eine Achse parallel zur Kurbelachse schwenkbar montiert ist,
wobei die Kurbeln (11, 12) mit der Kettenblattanordnung (4, 17) über Stangen (5, 6) verbunden sind, wobei jeder Gelenkpunkt (n) zwischen einer der Kurbeln (11, 12) und einer der Stangen (5, 6) an dem Teil der Kurbel liegt, der der Pedalachse (w, t) gegenüberliegt, bezogen auf die Kurbelachse (x),
**dadurch gekennzeichnet, dass** der Nocken (1) um die Kurbelachse (x) schwenkbar montiert ist, wobei das Schwenken des Nockens (1) um die Kurbelachse (x) nicht blockiert wird und die Position der Kettenblattanordnung (4, 17) während des Tretens variieren kann, wodurch es ihr ermöglicht wird, sich selbst zu positionieren.

2. Fahrradtretlager nach Anspruch 1, **dadurch gekennzeichnet, dass** der Gelenkpunkt an jeder der Kurbeln in einer Ebene liegt, die durch die Kurbelachse (x) verläuft und mit der Ebene, die durch die Pedalachse (w, t) und die Kurbelachse (x) verläuft, einen Winkel zwischen 0 und 90° bildet.

3. Fahrradtretlager nach Anspruch 1, **dadurch gekennzeichnet, dass** der Gelenkpunkt an jeder der Kurbeln in der Ebene liegt, die durch die Pedalachse (w, t) und die Kurbelachse (x) verläuft.

4. Fahrradtretlager nach einem der vorstehenden Ansprüche,
**dadurch gekennzeichnet, dass** sie Mittel zur Begrenzung des Schwenkens des Nockens um die Kurbelachse (x) umfasst.

5. Fahrradtretlager nach Anspruch 4, **dadurch gekennzeichnet, dass** die Mittel zur Begrenzung des Schwenkens mindestens einen Anschlag (16) umfassen, der geeignet ist, sich auf einen Teil des Fahrrads zu stützen.

6. Fahrradtretlager nach einem der Ansprüche 1 bis 3,
**dadurch gekennzeichnet, dass** der Nocken (1) frei gelassen wird, um um die Kurbelachse (x) zu schwenken.

7. Fahrradtretlager nach einem der vorstehenden Ansprüche,
**dadurch gekennzeichnet, dass** der Nocken (1) einen Gewindeteil aufweist, der geeignet ist, in das Innere des Fahrradgehäuses (2) geschraubt zu werden, um geeignet zu sein, um die Kurbelachse (x) zu schwenken.

## Claims

1. A cycle crankset, comprising
- independent cranks (11, 12) articulated about a crank axis (x) and each having a pedal axis (w, t),
- a cam (1), and
- a chainring assembly (4, 17) pivotably mounted around the cam (1), about an axis parallel to the crank axis,
the cranks (11, 12) being connected to said chainring assembly (4, 17) by means of connecting rods (5, 6), each articulation point (n) between one of said cranks (11, 12) and one of said connecting rods (5, 6) being located on the portion of the crank opposite the pedal axis (w, t), relative to the crank axis (x),
**characterized in that** said cam (1) is pivotably mounted about said crank axis (x), the pivoting of said cam (1) about said crank axis (x) not being blocked, and the position of the chainring assembly (4, 17) can vary during pedaling, allowing it to self-position.

2. The cycle crankset according to claim 1, **characterized in that** said articulation point is located, on each of said cranks, in a plane passing through the crank axis (x) and forming an angle between 0 and 90° with the plane passing through the pedal axis (w, t) and the crank axis (x).

3. The cycle crankset according to claim 1, **characterized in that** said articulation point is located, on each of said cranks, in the plane passing through the pedal axis (w, t) and the crank axis (x).

4. The cycle crankset according to any of the preceding claims, **characterized in that** it comprises means for limiting the pivoting of the cam about said crank axis (x).

5. The cycle crankset according to claim 4, **characterized in that** said means for limiting the pivoting comprise at least one stop (16) which is able to abut part of the cycle.

6. The cycle crankset according to any of claims 1 to 3, **characterized in that** the cam (1) is left free to pivot about said crank axis (x).

7. The cycle crankset according to any of the preceding claims,
**characterized in that** said cam (1) comprises a threaded portion, which is capable of being screwed inside a housing (2) of the cycle, so as to be able to pivot about the crank axis (x).
